Europäisches Patentamt

(19) European Patent Office

Office européen des brevets

(11) Publication number: **0 051 422 B1**

**EUROPEAN PATENT SPECIFICATION**

(45) Date of publication of patent specification: **15.06.88**

(51) Int. Cl.⁴: **G 06 F 7/48,** G 06 F 7/38

(21) Application number: **81305062.2**

(22) Date of filing: **27.10.81**

(54) **High speed digital processor.**

(30) Priority: **31.10.80 JP 152051/80**

(43) Date of publication of application:
**12.05.82 Bulletin 82/19**

(45) Publication of the grant of the patent:
**15.06.88 Bulletin 88/24**

(84) Designated Contracting States:
**DE FR GB IT**

(56) References cited:
**US-A-3 477 063**
**US-A-4 075 704**

**IBM JOURNAL OF RESEARCH AND
DEVELOPMENT, vol. 11, no. 1, January 1967,
pages 34-53, New York, USA**

(73) Proprietor: **Hitachi, Ltd.**
**5-1, Marunouchi 1-chome**
**Chiyoda-ku Tokyo 100 (JP)**
(73) Proprietor: **HITACHI DENSHI KABUSHIKI
KAISHA**
**23-2, Kanda-suda-cho, 1-chome**
**Chiyoda-ku Tokyo (JP)**

(72) Inventor: **Hagiwara, Yoshimune**
**1473 Josuihoncho**
**Kodaira-shi Tokyo (JP)**
Inventor: **Sugiyama, Shizuo**
**201 Megurida-cho**
**Kodaira-shi Toyko (JP)**
Inventor: **Maeda, Narimichi**
**1-35-30 Kashiwa-cho**
**Tachikawa-shi Tokyo (JP)**
Inventor: **Yumoto, Osamu**
**4-815 Nishi-koigakubo**
**Kokubunji-shi Tokyo (JP)**
Inventor: **Akazawa, Takashi**
**1-12-16 Gakuen-nishimachi**
**Kodaira-shi Toyko (JP)**
Inventor: **Kobayashi, Masahito**
**3514, Totsuka-cho Tosuka-ku**
**Yokohama-shi Kanagawa-ken (JP)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

(72) Inventor: **Kita, Yasuhiro**
**2-29-9, Akatsuki-cho**
**Hachioji-shi Tokyo (JP)**
Inventor: **Kita, Yuzo**
**2-10-16 Shimizugaoka**
**Fuchu-shi Toyko (JP)**

(74) Representative: **Ellis, Edward Lovell et al**
**MEWBURN ELLIS & CO. 2/3 Cursitor Street**
**London EC4A 1BQ (GB)**

## Description

The present invention relates to a digital signal processor, and more particularly to a digital processor which can process the data of voices, or images, in real time and which possesses the ability to perform multiplication and addition at high speed and with high accuracy.

In apparatus for synthesizing and analyzing speeches or in apparatus in the communication field such as a MODEM (modulator-demodulator), digital filter, CODEC and echo canceller, the application of a signal processor capable of processing digitized signals in real time has been studied.

The signal processor is provided as an LSI which contains a program memory and a multiplier as well as an adder/subtracter for exclusive use for processing data at high speed. It is adapted to various usages by changing a program.

In the case where the signal processor is used for, e.g., the filter processing of voice signals, an internal operation data becomes a comparatively wide dynamic range of 16—28 bits due to multiplication and addition operations. Therefore, when the structure of the multiplier circuit or the adder/subtractor circuit is made the fixed point data operation type, the hardware scale becomes larger exponentially with an increase in the number of bits of the operation data, and the LSI implementation becomes difficult. This problem can be solved by making the construction of the processor the floating point data operation type. However, when the data processing system of a conventional general-purpose computer is constructed so that the multiplier and the adder/subtracter circuits are connected by data buses and that they perform floating point operations independently of each other, the multiplication and addition operations which are the fundamental operation of the signal processor, take a long time, so that the real time operation of the signals becomes difficult.

One type of a digital data processor is disclosed in United States Patent Specification No. 4,075,704. The digital processor includes a plurality of memory registers, a floating point adder, a floating point multiplier intercoupled by a plurality of simultaneously operable parallel buses facilitating parallel multiple operations during one clock cycle. The floating point adder and multiplier each include a number of stages separated by intermediate temporary storage registers which receive the partial results of a computation for use by the next stage during the next clock period. Floating point additions, multiplications and other arithmetic and logical are produced during each clock cycle.

It is an object of the present invention to provide a signal processor which is suitable for the LSI implementation and which can process digital signals such as voices at high speed in real time.

According to the present invention there is provided a digital processor comprising: (a) interface means for data input/output; (b) a first data bus which has a first number of bits and which is connected to the interface means; (c) data memories connected to the first data bus and for storing data on said first data bus; (d) a second data bus which transmits the data stored in said data storage means; (e) a floating point multiplication means connected to the first and second data buses and for performing floating point multiplication of data on said first and second data buses in floating point representation, to deliver an operated result having a floating point representation; (f) floating point addition/subtraction means including an input selection portion selecting a pair of input data from amongst a plurality of input data and for subjecting said pair of input data to a floating point addition/subtraction; (g) accumulation means for holding data delivered from said addition/subtraction means; (h) a third data bus which supplies an output of said accumulation means to said input selection portion of said addition/subtraction means; (i) switching means connected between said accumulation means and said first and third data buses; and (j) control means for controlling the operations of the respective means in accordance with program instructions; characterized in that:

said operated results of the multiplication means and addition/subtraction means have a second number of bits which is larger than the first number of bits; in that said operated result of the multiplication means is transmitted to the input selection portion through a fourth data bus having the second number of bits; in that said third data bus has the second number of bits; in that said first and second data buses are connected to the input selection portion; in that said input selection portion of said addition/subtraction means includes a first data conversion means for converting the floating point data of the first number of bits applied through said first and second data buses into floating point data of the second number of bits; in that said switching means includes a second data conversion means for converting the floating point data of the second number of bits applied from said accumulation means into floating point data of the first number of bits when it is necessary to provide the output of the accumulation means onto the first data bus; and in that each output from said input selection portion of said addition/subtraction means consists of an exponent part and a mantissa part both of which has a number of bits equal to that of said operated result of said multiplication means so that when said input selection portion has selected fixed point data applied from at least either of said first and second data buses, said first data conversion means operates so as to deliver the input data to said mantissa part.

The present invention will now be described in greater detail by way of example with reference to the accompanying drawings, wherein:—

Figure 1 is a block diagram showing one preferred form of a digital signal processor;

Figure 2 is a block diagram showing the detailed arrangement of the multiplier shown in Figure 1;

Figure 3(A) is a diagram for explaining the bit format of an input data, whilst Figure 3(B) is a diagram for explaining the bit format of an internal operation data in the adder/subtracter shown in Figure 1;

Figures 4(A) and 4(B) are block diagrams showing in combination the detailed arrangement of the adder/subtracter shown in Figure 1;

Figures 5(A) and 5(B) are diagrams for explaining the operation of a shift circuit 76 shown in Figure 4B;

Figures 6(A) and 6(B) are diagrams for explaining another operation of the shift circuit 76 shown in Figure 4B;

Figure 7 is a circuit diagram showing a preferred form of the shift circuit 76;

Figures 8(A) and 8(B) are diagrams for explaining output data in the absence and presence of a compensation for a data overflow, respectively;

Figure 9 is a circuit diagram showing details of the blocks 85, 87 and 89 which form an output correction circuit in the circuit of Figure 4(B);

Figures 10(A) to 10(D) are diagrams showing the aspects of changes of floating point data in various parts of the signal processor;

Figures 11(A) to 11(D) are diagrams showing the aspects of changes of fixed point data;

Figure 12 is a circuit diagram showing a preferred form of the input selector circuit 60 shown in Figure 4A;

Figure 13 is a circuit diagram showing a preferred form of the input selector circuit 61 shown in Figure 4A;

Figure 14 is a circuit diagram showing a preferred form of the output switching circuit 17 shown in Figure 1;

Figure 15 is a diagram showing the dynamic range of the digital signal processor shown in Figure 1;

Figure 16 is a time chart for explaining the operation of the processor; and

Figures 17 and 18 are block diagrams each showing a typical form of use of the signal processor.

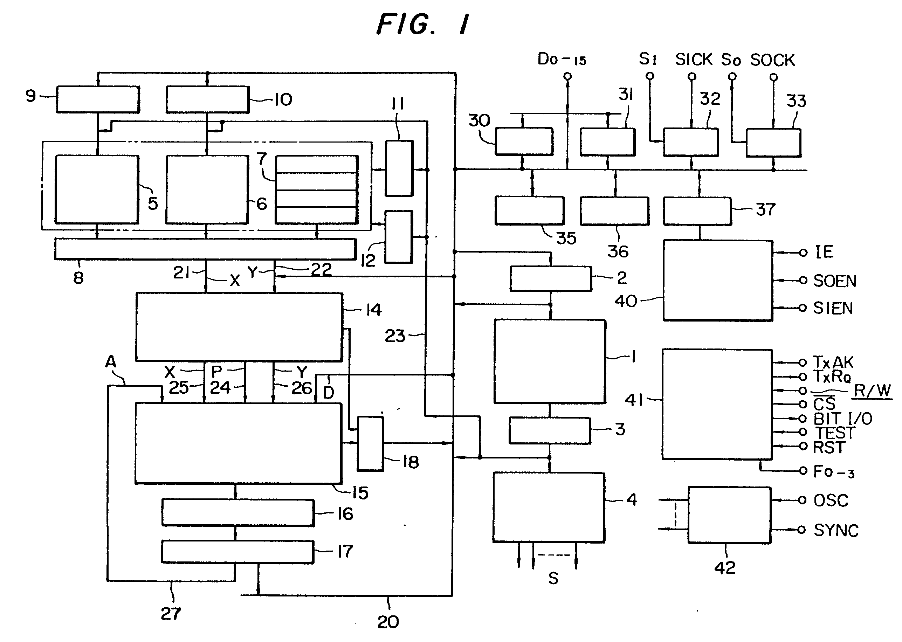

Referring first to Figure 1, the digital signal processor includes a memory 1 which serves to store a program, a program counter 2 which indicates a readout address of the program memory 1, an instruction register 3 which is connected to the program memory 1, and a control circuit 4 which generates various control signals S for operating the processor from an instruction word fetched into the instruction register 3. Each instruction word to be stored in the memory 1 consists of, for example, 22 bits and includes an operation code and data, an address or an address control information. The program counter 2 and the instruction register 3 are connected to a data bus (D bus) 20 of 16 bits.

The digital processor further includes memories 5 and 6 for storing data, and a general-purpose register 7. One of the memories 5 and 6 is a random access memory (RAM) and the other is a read-only memory (ROM). Each memory may well be a complex consisting of a plurality of ROMs or RAMs of small capacities. The memory stores data of 16 bits, and each data is read out onto an X bus 21 or Y bus 22 of 16 bits through a selector circuit 8. Registers 9 and 10 are provided which appoint the lower addresses of the data memories 5 and 6, whilst registers 11 and 12 are provided which appoint the upper addresses of the memories. The register 11 affords the upper address of the data to be read out onto the X bus 21, whilst the register 12 affords the upper address of the data to be read out onto the Y bus 22 or the address of the general-purpose register 7. These registers are given address information through a data bus 23 from the instruction register 3.

The digital processor also includes a multiplier 14 of the floating point operation type which calculates the product between the two data supplied from the X bus 21 and the Y bus 22 and which delivers the result to a P bus 24. As will be described later, this multiplier includes registers for holding the two input data X and Y and delivers the two unoperated data X and Y to an X bus 25 and a Y bus 26 as they are, respectively.

The digital processor also includes an adder/subtracter 15 of the floating point operation type, which executes an operation by receiving the output data X, Y and P of the multiplier 14 and data D and A of data buses 20 and 27 and which delivers the result of the operation to an accumulator 16. A switching circuit 17 supplies the data bus (A bus) 27 of 20 bits with the floating point data latched in the accumulator 16 and converts the data into data of 16 bits and delivers the latter to the D bus 20. A status code register 18 is connected to the multiplier 14 and the adder/subtracter 15 and stores a status code concerning the operated results thereof.

An output register 30 delivers the data of 16 bits on the data bus 20 to external terminals $D_0$—$D_{15}$ in parallel, whilst an input register 31 receives the 16-bit data from the external terminals onto the data bus 20 in parallel. A shift register 32 of 16 bits loads serial input data from a terminal SI in synchronism with the input clock of a terminal SIC in the period during which the input pulse of a terminal SIEN is "1". A shift register 33 of 16 bits serially delivers data to a terminal SO in synchronism with the input clock of a terminal SOCK in the period during which the input pulse of a terminal SOEN is "1". These two shift registers are respectively connected with the data bus 20 in a 16-bit parallel fashion.

A register 35 is provided controlling the operating status of the processor, whilst a counter 36 is provided in which a repetition number is set in the case where the processor is caused to repeatedly execute a certain instruction in accordance with a repeat instruction. A status register 37 is provided for indicating the internal status of the processor. The contents of the registers 35 and 37 can be respectively written and read externally through the data bus 20 and the terminals $D_0$—$D_{15}$.

A control circuit 40 is provided for controlling an interrupt to a processor operation and an input/output operation. By way of example, it operates so as to render the shift registers 32 and 33 operable with the leading edges of the input signals of the terminals SIEN and SOEN and to apply an interrupt to the program with the trailing edges of the respective signals and so as to start the registers 30 and 31 with the leading edges of the input and output signals of a terminal IE and to apply an interrupt to the program with the trailing edges thereof. A function control circuit 41 is provided for controlling the processor operation in response to a signal from an external control unit (for example, a microcomputer). By way of example, it receives from a terminal TxAK an acceptance signal for a DMA transfer mode, from a terminal R/W a signal indicating the transfer direction of parallel input/output data, from a terminal CS a signal indicating that an external device has selected the processor, from a terminal TEST an appointment signal for a test operation mode, from a terminal RST a reset signal, and from a terminal $F_{0-3}$ an operation control signal by the external device, and it delivers a parallel data transfer request signal from a terminal TxRQ. A terminal BIT I/O is a bidirectional input/output terminal for receiving or delivering data every bit. A clock pulse generator circuit 42 is provided for generating various internal clock pulses necessary for processor operation and supplies a terminal SYNC with a clock for synchronizing the internal operation of the processor and an external system. It receives a fundamental clock pulse through a terminal OSC from an external circuit.

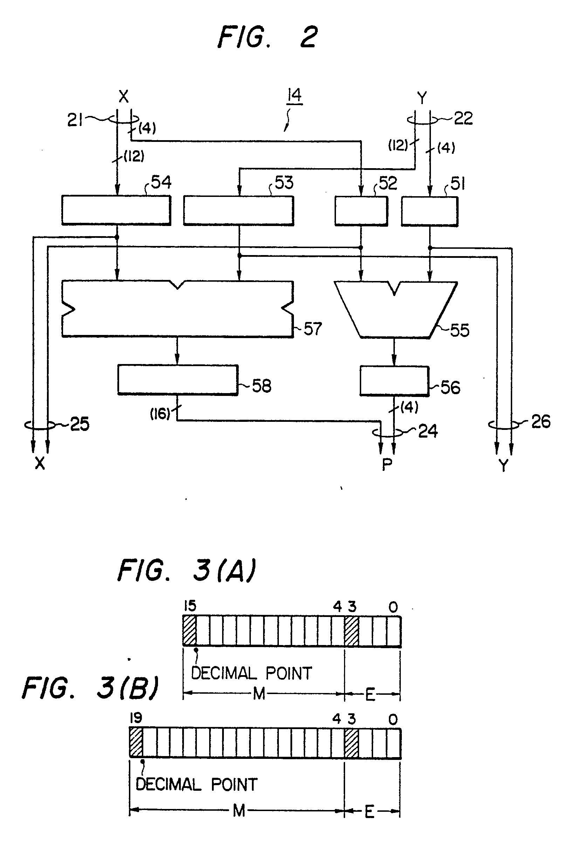

The multiplier 14 and the adder/subtracter 15 will now be described in greater detail with reference to Figures 2, 3(A) and 3(B), and 4(A) and 4(B).

As shown in Figure 2, the 16-bit data of the X bus 21 and the Y bus 22 are applied to the multiplier 14. These data are supplied from the memories 5 and 6, the general-purpose register 7 or the data bus 20. As illustrated in Figure 3(A), each of the data consists of an exponent part of less significant 4 bits and a mantissa part of more significant 12 bits. The most significant bits of the respective parts as indicated by hatched areas, i.e., the bits at positions of $2^3$ and $2^{15}$ are sign bits. A decimal point lies between $2^{15}$ and $2^{14}$. As shown in Figure 2, the exponent part data and mantissa part data supplied from the X bus 21 and Y bus 22 are respectively stored in registers 51 and 52 and registers 53 and 54. The exponent part data of the registers 51 and 52 are added by an adder circuit 55, and the sum is delivered to the P bus 24 through an output register 56 of 4 bits. On the other hand, the mantissa part data of the registers 53 and 54 are applied to a multiplier circuit 57 having a circuit arrangement similar to that in the case of the ordinary fixed point operation, and the multiplied result has its more-significant 16 bits delivered to the P bus 24 through an output register 58. That is, the operated output of the multiplier 14 is transformed into data of 20 bits consisting of an exponent part of less significant 4 bits and a mantissa part of more significant 16 bits as shown in Figure 3(B) and is applied to the adder/subtracter 15. The outputs of the registers 52 and 54 are transmitted to the X bus 25 and the outputs of the registers 51 and 53 to the Y bus 26, and they are respectively applied to the adder/subtracter 15 as data of 16 bits.

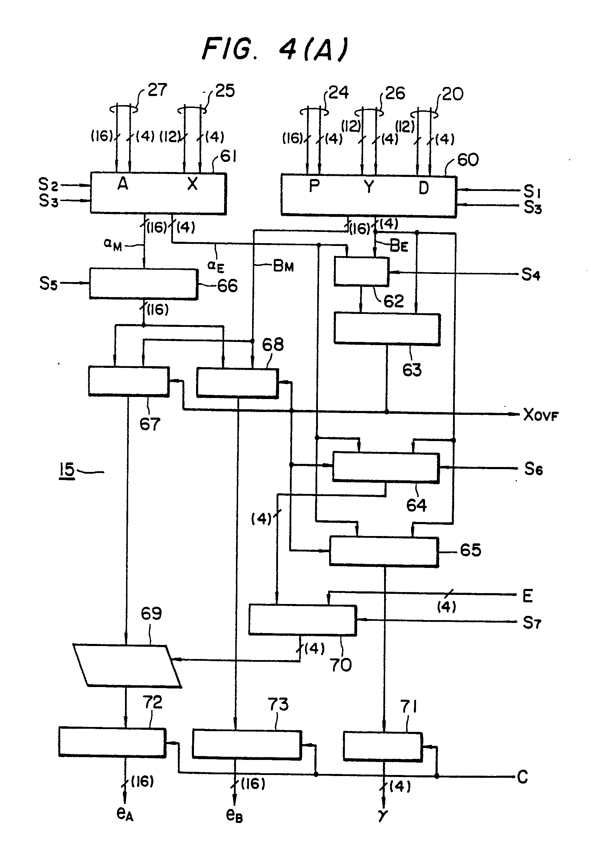

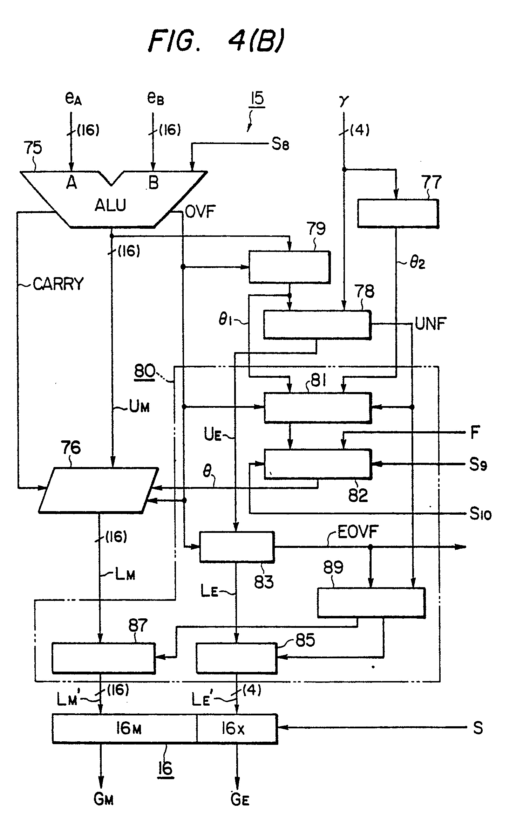

The arrangement of the adder/subtracter 15 is shown in Figures 4(A) and 4(B). As illustrated in Figure 4(A), the adder/subtracter is supplied with the data D, P, X, Y and A through the buses 20 and 24 to 27. The data, P, Y and D are applied to a selector circuit 60, and one data appointed by a control signal $S_1$ is selected. The data A and X are applied to a selector circuit 61, and one data appointed by a control signal $S_2$ is selected. It should be noted that each of the input data D, X and Y is the 16-bit data shown in Figure 3(A). As will be stated later, the selector circuits 60 and 61 are so constructed that when the 16-bit data have been appointed, they convert these data into the 20-bit data shown in Figure 3(B) and deliver the latter data. This bit exchange differs depending upon whether the input data D, X and Y are fixed point data or floating point data, and the exchange operation is assigned by a control signal $S_3$. Thus, input data in the fixed point representation can also be processed by the adder/subtracter of the floating point operation type. Control signals $S_1$, $S_2$ $S_3$ ... and $S_n$ are provided from the control circuit 4 in correspondence with instruction words in the program.

Letting the output data from the selector circuit 60 be $\beta$ (exponent part: $\beta_E$, mantissa part: $\beta_M$) and the output data from the selector circuit 61 be $\alpha$ (exponent part: $\alpha_E$, mantissa part: $\alpha_M$), the exponent part data $\alpha_E$ is applied to a comparator circuit 63 through a selector circuit 62 and is compared in magnitude with the exponent part data $\beta_E$. The exponent part data $\alpha_E$ and $\beta_E$ are also applied to a subtracter circuit 64 and a selector circuit 65. The mantissa part data $\alpha_M$ is applied to selector circuits 67 and 68 through a negate circuit 66, whilst the mantissa part data $\beta_M$ is directly applied to the selector circuits 67 and 68. In this embodiment, the negate circuit 66 is provided in order to realize the subtraction between the data $\alpha$ and $\beta$ by the use of an arithmetic and logic unit (ALU) 75, and the data $\alpha_M$ passes through the negate circuit without any change in the case of addition. Each of the selector circuits 65, 67 and 68 selects one of its two inputs in response to the output signal of the comparator circuit 63. With a timing signal C, the output of the selector circuit 65 is latched in a latch circuit 71, the output of the selector circuit 67 is latched in a latch circuit 72 through a shift circuit 69, and the output of the selector circuit 68 is latched in a latch circuit 72. The subtracter circuit 64 is also controlled by the output of the comparator circuit 63, and it operates so as to subtract the smaller one from the greater one of the inputs $\alpha_E$ and $\beta_E$ in accordance with the comparison result. The shift circuit 69 shifts its input data rightwards that number of bits which corresponds to the output of the subtracter circuit 64 obtained through a selector circuit 70. The operation of the shift circuit 69 can also be controlled by another data E applied to the selector circuit 70, and the selection of the shift number of shifts is made with a control signal $S_7$.

As shown in Figure 4(B), the outputs $e_A$ and $e_B$ of the latch circuits 72 and 73 are applied to the fixed point operation type adder (ALU) 75 which is operated by a control signal $S_8$, and the added result $U_M$ is applied to a leftwards shift circuit 76. On the other hand, the output $\gamma$ of the latch circuit 71 is applied to a constant adder circuit 77 and one input terminal of a subtracter circuit 78. A zero detector 79 is provided which judges the output $U_M$ of the adder 75. In the case where the output $U_M$ of the adder 75 afforded in the complement representation is a positive number, the zero detector 79 counts the number of continuous "0" bits succeeding to a sign bit located at the most significant bit of the output $U_M$. In the case where the output $U_M$ is a negative number, it counts the number of continuous "1" bits succeeding to the sign bit. The output $\theta_1$ of the zero detector 79 is applied to the shift circuit 76 through an output correction circuit 80 which is provided for the normalization of data and a protection against overflow, and it determines the number of bits of data to be shifted by this shift circuit. The output $\theta_1$ of the zero detector 79 is also applied to the other input terminal of the subtracter circuit 78, and the output $U_E$ of this subtracter circuit is applied to the exponent part 16X of the accumulator 16 through the output correction circuit 80. The mantissa part 16M of the accumulator 16 is supplied with an output data $L_M'$ from the shift circuit 76 as corrected in the output correction circuit 80.

The output correction circuit 80 comprises:

A selector circuit 81 which selects either the output $\theta_1$ of the zero detector 79 or the output $\theta_2$ of the constant adder circuit 77 in response to an overflow detection signal OVF provided from the adder 75 and an underflow detection signal UNF provided from the subtracter circuit 78; a selector circuit 82 which applies either the output of the selector circuit 81 or a data F given by the program, to the shift circuit 76 as a shift bit number-indicating signal $\theta$ in response to a control signal $S_9$ based on the program; an increment circuit 83 which adds 1 (one) to the subtracter circuit output $U_E$ when the overflow signal OVF is "1" and which delivers a signal EOVF when the added result $L_E$ has also undergone an overflow; an exponent part correction circuit 85 which is connected between the increment circuit 83 and the exponent part 16X of the accumulator 16; a mantissa part correction circuit 87 which is connected between the shift circuit 76 and the mantissa part 16M of the accumulator 16;

and a control circuit 89 which controls the operations of the two correction circuits 85 and 87 in response to the signals UNF and EOVF.

The adder/subtracter 15 operates as follows.

The respective outputs $\alpha$ and $\beta$ of the two input selector circuits 61 and 60 shown in Figure 4(A) are data in the floating point representation, and their values are denoted by the following equation:

$$\left. \begin{array}{l} \alpha = \alpha_M \cdot 2^{\alpha_E} \\ \beta = \beta_M \cdot 2^{\beta_E} \end{array} \right\} \qquad (1)$$

Assuming now the case of performing an addition operation between the two data $\alpha$ and $\beta$ being in the relation of $\alpha_E > \beta_E$, the added result Z is given by:

$$Z = \alpha_M \cdot 2^{\alpha_E} + \beta_M \cdot 2^{\beta_E}$$

$$= [\alpha_M + \beta_M \cdot 2^{-(\alpha_E - \beta_E)}] \cdot 2^{\alpha_E} \qquad (2)$$

The comparator circuit 63 compares the magnitudes of the data $\alpha_E$ and $\beta_E$. It causes the selector circuit 65 to select the greater exponent part data $\alpha_E$, causes the selector circuit 67 to select the mantissa part data $\beta_M$ corresponding to the smaller exponent part $\beta_E$, causes the selector circuit 68 to select the mantissa part data $\alpha_M$ corresponding to the greater exponent part $\alpha_E$, and applies a control signal to the subtracter circuit 64 so as to subtract the smaller exponent $\beta_E$ from the greater exponent $\alpha_E$. During the execution of the addition operation, the selector circuit 70 selects the output $(\alpha_E - \beta_E)$ from the subtracter circuit 64, and the shift circuit 69 operates so as to shift the output $\beta_M$ of the selector circuit 67 rightwards (towards less significant bits) $(\alpha_E - \beta_E)$ bits. As a result, the respective outputs of the latch circuits 71, 72 and 73 become $\gamma = \alpha_E$,

$$e_A = \beta_M \cdot 2^{-(\alpha_E - \beta_E)}$$

and $e_B = \alpha_M$, and the output $U_M$ of the adder 75 having performed the operation of $e_A + e_B$ represents the mantissa part of equation (1). Accordingly, the operated value Z at this stage is indicated by the following equation:

$$Z = U_M \cdot 2^{\gamma} \qquad (3)$$

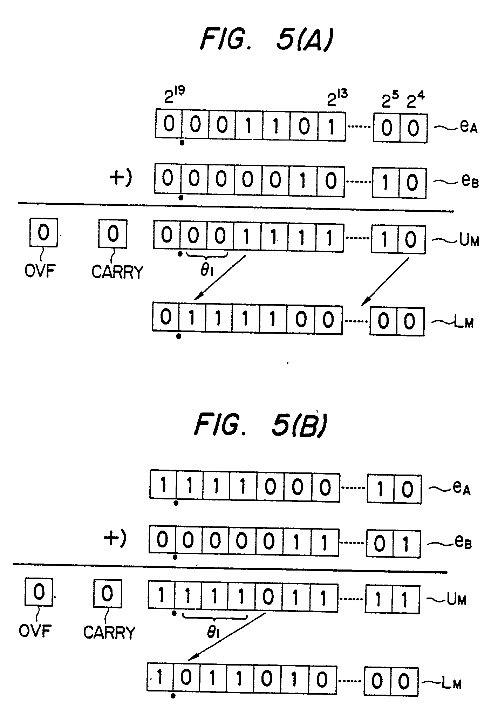

The zero detector circuit 79 and the leftwards shift circuit 76 serve to normalize the adder output $U_M$ so as to maximize its absolute value. When, as illustrated in Figure 5(A), the number $\theta_1$ of the continuous "0" succeeding to the sign bit (below the decimal point) of the data $U_M$ is detected by the zero detector circuit 79 and the data $U_M$ is shifted leftwards (onto the side of the most significant bit) $\theta_1$ bits by the shift circuit 76, a mantissa part data $L_M$ whose absolute value is the maximum is obtained. In the case where the data $U_M$ is a negative number, it may be shifted the number of the continuous "1"s as illustrated in Figure 5(B). In this case, as regards the exponent part data $\gamma$, the operation of $(\gamma - \theta_1)$ is executed by the subtracter circuit 78, and its output $U_E$ is made a normalized exponent value. Unless the overflow occurs in the data $U_M$, the output $L_E$ of the increment circuit 83 becomes equal to the normalized exponent value $U_E$, and the processing of the normalization can be represented by the following equation:

$$Z = [U_M \cdot 2^{\theta_1}] \cdot 2^{(\gamma - \theta_1)}$$

$$= L_M \cdot 2^{L_E} \qquad (4)$$

Assuming the magnitude of the exponent part $\gamma$ to be 4 bits, values which $\gamma$ can express by the representation of 2's complements are limited within a range of

$$[+7 \geq \gamma \geq -8].$$

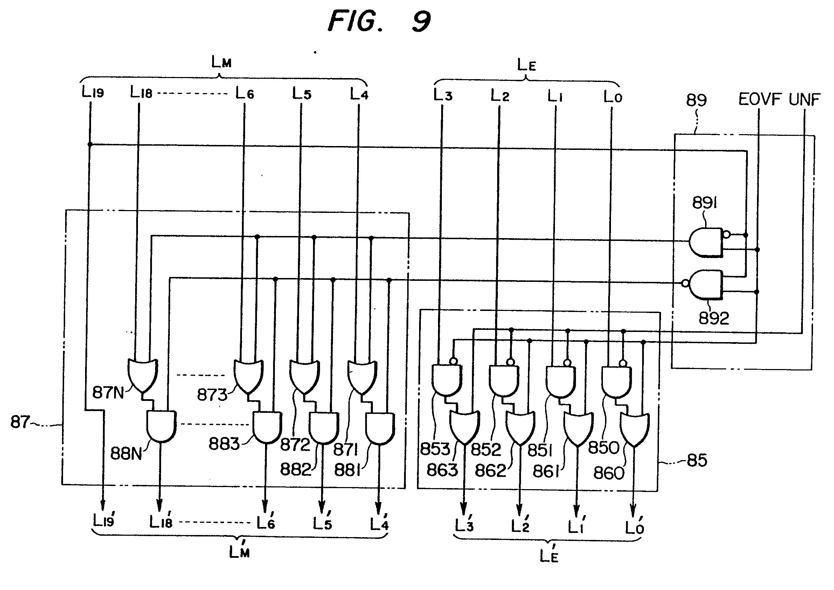

Accordingly, when it is intended in the normalization of the mantissa part data to shift the data $U_M$ leftwards fully the detection value $\theta_1$ of the zero detector circuit 79, the value of $(\gamma - \theta_1)$ on the exponent part side becomes smaller than $-8$, and underflow sometimes occurs in the subtracter circuit 78. At this time, the signal (borrow signal) UNF indicative of the underflow of the data is generated from the subtracter circuit 78 which executes the operation of $(\gamma - \theta_1)$. In the circuit of Figure 4(B), when the signal UNF has appeared, the selector circuit 81 selects the output $\theta_2$ of the constant adder circuit 77 instead of the input $\theta_1$, and the constant adder circuit 77 provides as the data $\theta_2$ a value with a constant "8" added to the data $\gamma$ of the exponent part. Thus, by way of example, when the value of $\gamma$ is "$-5$", the value of $\theta_2$ becomes "3". Therefore, the shift number of bits of the mantissa part data $U_M$ is limited to 3 bits, and the value of the exponent part after the normalization remains at the minimum value "$-8$". The operation of making the exponent part "$-8$" upon the occurrence of the signal UNF is performed by the exponent part correction circuit 85 to be described later with reference to Figure 9.

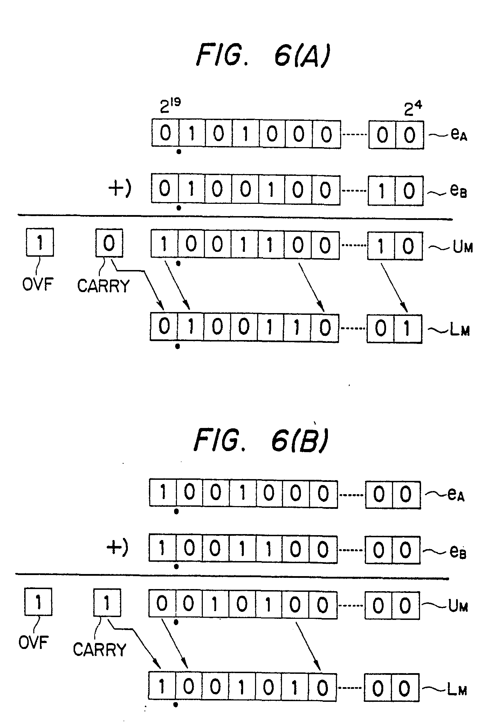

In the case where overflow has occurred in the operated result $U_M$ of the adder 75 as illustrated in Figure 6(A) and 6(B), the true sign of the data appears at the carry output, and the most significant bit of the numerical value appears at the position of the sign bit. In this case, accordingly, the overflow detection signal OVF may be used to stop the operations of the selector circuit 81 and the zero detector circuit 79, to cause the shift circuit 76 to perform the 1-bit right shift operation and to cause the increment circuit 83 to perform the operation of $U_E (= \gamma) + 1$ so as to operate the data Z as in the following equation:

$$Z = [U_M \cdot 2^{-1}] \cdot 1^{(\gamma + 1)} \qquad (5)$$

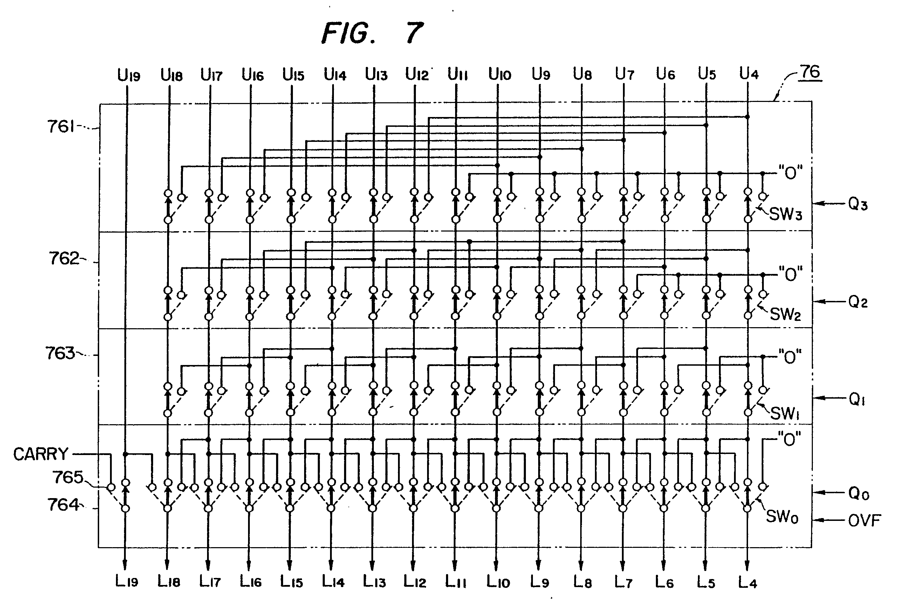

An example of the shift circuit 76 for executing the above operation is shown in Figure 7. This circuit comprises a shifter 761 of 8 bits, a shifter 762 of 4 bits, a shifter 763 of 2 bits and a shifter 764 of 1 bit which correspond to the respective bits $\theta_3$ to $\theta_0$ of the shift bit number-indicating data $\theta$. Switches $SW_3$ to $SW_0$ of the respective signal lines of the shifters are connected to contacts on less significant bit sides when the corresponding control bits $\theta_3$ to $\theta_0$ are "1". The respective switches $SW_0$ of the 1-bit shifter 764 are connected to contacts on the more significant bit sides when the overflow detection signal OVF is "1", the output line $L_{19}$ of the sign bit is connected with a carry signal input terminal 765, and the 1-bit right shift operation of the data stated above is realized.

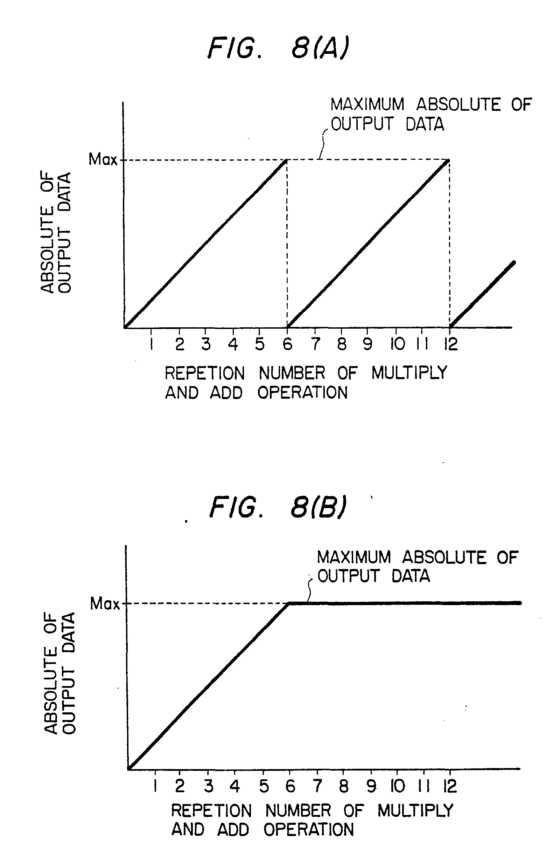

When, in the circuit of Figures 4(A) and 4(B), the overflow detection signal OVF of the adder 75 has become "1", an overflow sometimes occurs also in the operated result of $(\gamma + 1)$ by the increment circuit 83. In this case, the operated result $Z(= \alpha + \beta)$ has undergone an overflow. If a multiply and add operation is continued in the condition left intact, the absolute value of the output data to be obtained in the accumulator 16 varies as shown in Figure 8(A) and becomes a quite meaningless value.

The control circuit 89 and the correction circuits 85 and 87 constitute a circuit which operates upon the occurrence of the overflow in the operated result Z so as to fix the absolute value of the output data to the positive or negative maximum value as illustrated in Figure 8(B). An example of a preferred form of arrangement of these circuits is shown in Figure 9.

Referring to Figure 9, the exponent part correction circuit 85 consists of 2-input AND gates 850 to 853 and 2-input OR gates 860 to 863 which correspond to the input bits $L_0$ to $L_3$. The respective bit signals are delivered onto the accumulator 16X side through these gates. The AND gate 853 whose one input terminal receives the sign bit $L_3$ of the exponent part data has its other input terminal supplied with the inverted signal of the overflow detection signal EOVF provided from the increment circuit 83. The OR gate 863 whose one input terminal is connected with the output of the AND gate 853 has its other input terminal supplied with the underflow detection signal UNF from the subtracter circuit 78. The other input terminal of each of the AND gates 850 to 852 which are respectively supplied with the data bits $L_0$ to $L_2$ is supplied with the inverted signal of the signal UNF, whilst the other input terminal of each of the OR gates 860 to 862 is supplied with the signal EOVF. The signals EOVF and UNF cannot become "1" at the same time. Therefore, when the signal EOVF is "1", the output of the exponent part correction circuit 85 becomes $[0111] = +7$ and makes the exponent part the maximum value. When the signal UNF is "1", it becomes $[1000] = -8$ and satisfies the exponent value for $\theta = \theta_2$ as stated before.

On the other hand, the mantissa part correction circuit 87 delivers the sign bit $L_{19}$ as it is and delivers the data bits $L_4$ to $L_{18}$ through 2-input OR gates 871 to 87N and 2-input AND gates 881 to 88N respectively. The other input terminal of each OR gate is supplied with the output of an AND gate 891 in the control circuit 89, whilst the other input terminal of each AND gate is supplied with the output of a NAND gate 892 in the control circuit 89. If, when the signal EOVF is "1", the mantissa part data is a positive value or the sign bit $L_{19}$ is "0", both the outputs of the AND gate 891 and the NAND gate 892 become "1", and the output of the correction circuit 87 becomes the positive maximum value [0111 . . . 1]. If the sign bit $L_{19}$ is "1", the output of the NAND gate 892 becomes "0", so that the output of the correction circuit 87 becomes the negative maximum value [1000 . . . 00]. When the signal EOVF is "0", these correction circuits 85 and 87 deliver the respective input data $L_E$ and $L_M$ as data $L_E'$ and $L_M'$ as they are. These output data $L_E'$ and $L_M'$ are delivered to the A bus 27 through the accumulator 16 as well as the switching circuit 17, and are fed back to the selector circuit 61 of the adder/subtracter 15.

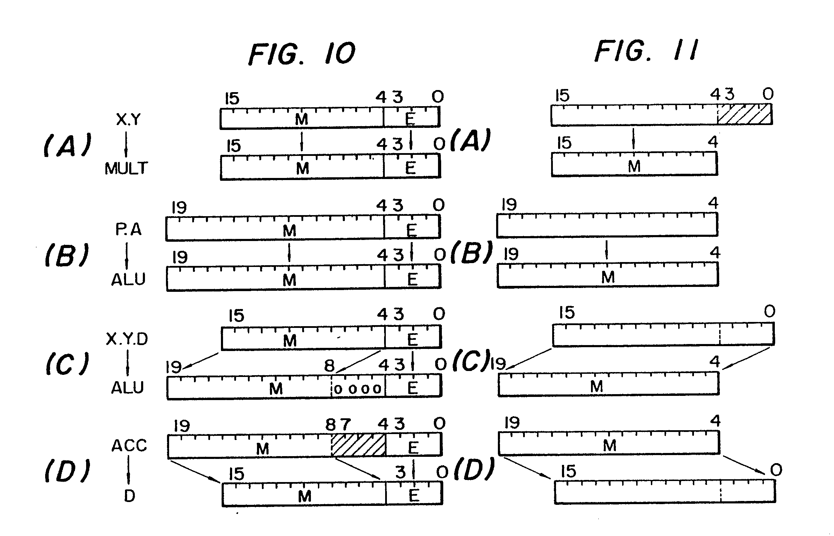

From the above description it will be understood that in the digital signal processor of the present invention, the multiplier 14 and the adder/subtracter 15 can perform floating point operations respectively. In the case, the data input from the X bus 21 or Y bus 22 into the multiplier 14 and the data input from the multiplier 14 or A bus 27 into the adder/subtracter (ALU) 15 agree in the number of bits of the input data and the number of bits of the data of the receiving side circuit, so that the bit positions are not altered between the data as illustrated in Figure 10(A) or 10(B). However, in the case where the 16-bit data from the X bus 25, Y bus 26 or D bus 20 are applied to the adder/subtracter 15, the number of bits of the mantissa part data is not equal. This necessitates the operations of adding "0"s to less significant 4 bits of the mantissa part input data M as illustrated in Figure 10(C) in the input selector circuits 60 and 61 of the adder/subtracter. In the case where the adder/subtracter output of 20 bits obtained in the accumulator (ACC) 16 is to be delivered to the D bus 20 of 16 bits, the operation of discarding the data of less-significant 4 bits of the mantissa part M and converting the 20-bit output into data of an exponent part of 4 bits and a mantissa part of 12 bits as illustrated in Figure (10D) is necessitated in the switching circuit 17.

In the above described digital signal processor, the input selector circuits 60 and 61 and the output switching circuit 17 which perform the foregoing data conversion operations are provided so that the processor can execute also fixed point operations by the appointment of a program.

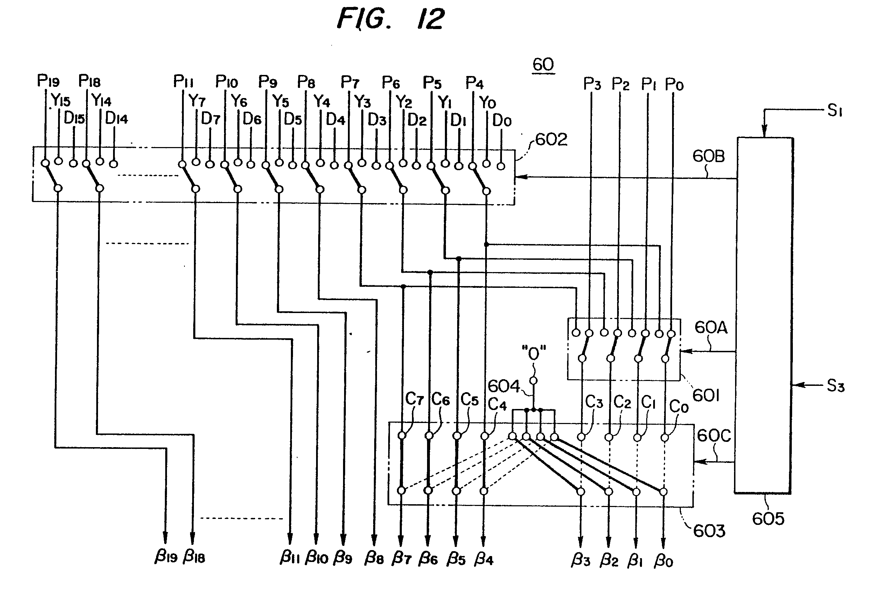

The multiplication of the fixed point data X and Y is carried out in the mantissa part data multiplier circuit 57 within the multiplier 14. In this case, of the input data X and Y of 16 bits, more-significant 12 bits to enter the mantissa part input registers 53 and 54 are handled as effective data as illustrated in Figure 11(A). On the other hand, in the case of the addition/subtraction of the fixed point data, the shift operations of the shift circuits 69 and 76 within the adder/subtracter 15 are stopped by the control bit in the program, and the operated result of mantissa parts obtained in this status is utilized. In order to stop the operation of the shift circuit 69, the control signal $S_7$ may be so generated that the operation instruction of the fixed point data applies a data of a numerical value "0" to the data line E in Figure 4(A) and that the selector circuit 70 selects an input from the data line E. In order to stop the operation of the shift circuit 76, the control signal $S_9$ may be so generated that the data of the numerical value "0" is applied to the data line F in Figure 4(B) and that the selector circuit 82 selects an input from the data line F.

In the addition/subtraction of the fixed point data, the data input from the multiplier 14 or A bus into the adder/subtracter 15 may be executed by feeding the 16-bit data of the mantissa part likewise to the case of a floating point operation as illustrated in Figure 11(B). The data input from the X bus, Y bus or D bus is executed by putting all the bits into the mantissa part as illustrated in Figure 11(C), and the mantissa part data obtained in the accumulator (ACC) has all the bits delivered to the D bus 20 as illustrated in Figure 11(D).

Figure 12 shows a preferred example of the input selector circuit 60 of the adder/subtracter provided with the bit exchange function referred to above. In this circuit diagram, $P_0$ to $P_{19}$, $Y_0$ to $Y_{15}$ and $D_0$ to $D_{15}$ indicate the bits of the input data from the P bus 24, Y bus 26 and D bus 20 respectively. Amongst them, the exponent part at $P_0$ to $P_3$ of the data P is applied to a switch 601, the four output terminals of which are connected to the terminals $C_0$ to $C_3$ of a switch 603. The respective bits of the data Y and D and the bits $P_4$ to $P_{19}$ of the mantissa part of the data P are applied to a switch 602. The output terminals of the switch 602 at more-significant 12 bits are connected to output lines $\beta_8$ to $\beta_{19}$ of the more-significant bits of the data $\beta$, and the output terminals of the switch 602 at less-significant 4 bits are connected to the terminals $C_4$ to $C_7$ of the switch 603 and the other input terminals of the switch 601. The switch 603 is provided with eight output terminals which are connected to output lines $\beta_0$ to $\beta_7$ of the less-significant bits of the data $\beta$, and four terminals 604 which afford the status "0"

A logic circuit 605 generates drive signals 60A, 60B and 60C for the switches 601, 602 and 603 on the basis of the control signals $S_1$ and $S_3$ applied from the control circuit 4 in accordance with the instruction words of the program.

When a data to be selected is specified by the control signal $S_1$, the switches 601 and 602 are respectively operated by the signals 60A and 60B, and any one of the data P, Y and D is selected. At this time, if the control signal $S_3$ specifies a floating point operation, the switch 603 operates so as to connect the output lines $\beta_0$ to $\beta_3$ with the terminals $C_0$ to $C_3$ and the output lines $\beta_4$ to $\beta_7$ with the terminals $C_4$ to $C_7$ (when the input data P is selected) or the terminals 604 (when the input data Y or D is selected). If the control signal $S_3$ specifies a fixed point operation, the output lines $\beta_0$ to $\beta_3$ are connected with the terminals 604 and the output lines $\beta_4$ to $\beta_7$ with the terminals $C_4$ to $C_7$ irrespective of input data.

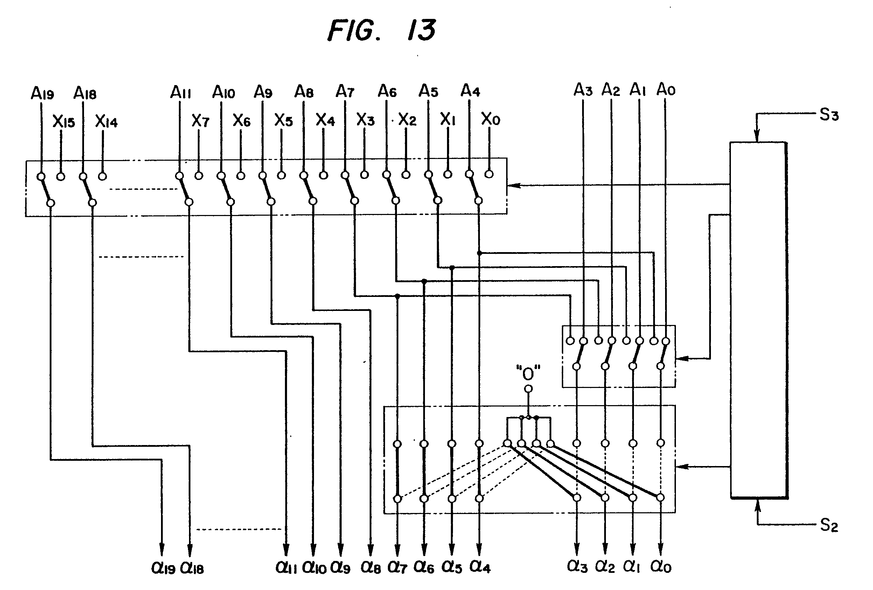

Figure 13 shows a preferred circuit arrangement of the other input selector circuit 61. This circuit is the same as that in Figure 12 except that input data are applied from the A bus and the X bus, and accordingly no further explanation is given.

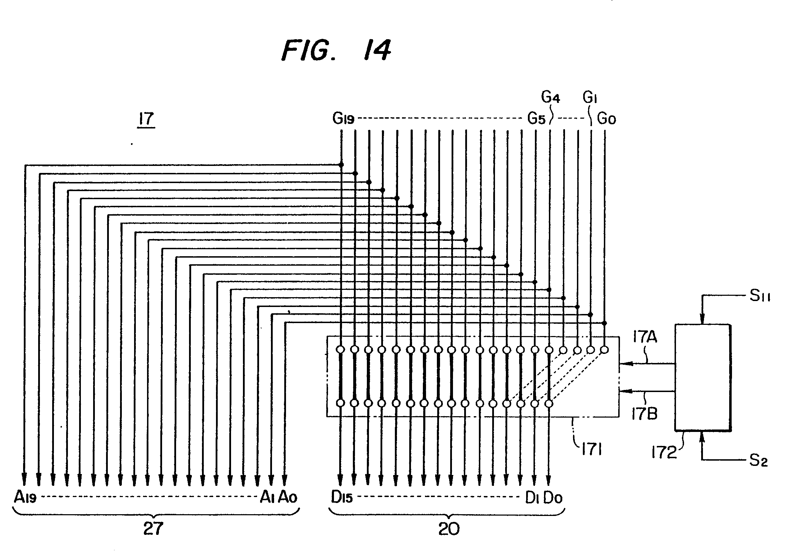

Figure 14 shows a preferred circuit arrangement of the switching circuit 17 which is connected to the accumulator 16. In this circuit, an output of 20 bits $G_0$ to $G_{19}$ from the accumulator is applied to the input terminals of a switch 171. The switch 171 has sixteen output terminals which are connected with the respective signal lines $D_0$ to $D_{15}$ of the data bus 20. The connections between the input terminals and the output terminals are controlled by output signals 17A and 17B from a logic circuit 2. In the case where the control signal $S_3$ based on the instruction of the program indicates a floating point operation, the switch 171 is controlled by the signal 17B and connects the signal lines $D_0$ to $D_3$ of less-significant 4 bits on the output side with the input signal lines $G_0$ to $G_3$. In the case of a fixed point operation, the switch 171 connects the lines $D_0$ to $D_3$ with the lines $G_4$ to $G_7$. The signal 17A controls the output of more-significant bit data to the data bus 20.

In the above described embodiment, not only the operation of the fixed point data or the floating point data as described above can be performed, but also an operation can be performed by converting an operated result obtained in the floating point format into a data in the fixed point format in accordance with the instruction of a program or conversely converting a data given in the fixed point format into a data in the floating point format. This function is very convenient when the signal processor exchanges data with an external device through the data bus 20 and the input/output interfaces 30 to 33. The reason therefor is as follows. Many of external devices to be connected with the signal processor handle data in the fixed point representation format, and if the floating point operation result of the signal processor is delivered as it is, a special device for converting the data format is required outside the processor.

The conversion from the floating point representation into the fixed point representation (hereinbelow, termed "FLFX") is carried out as follows.

Firstly, when a data in the floating point representation to be obtained in the accumulator 16 is assumed to be represented by the equation:

$$A = \alpha_M \cdot 2^{\alpha_E}$$

a data $y_1 = \beta_M \cdot 2^{\beta_E}$ whose exponent part satisfies the relation of $\alpha_E < \beta_E$ and whose mantissa part has the value of $\beta_M = 0$ is stored in a specified address of the data memory 5 or 6 in advance. This address corresponds with the address part of an instruction word for the FLFX (Floating point to Fixed point) in advance. Various control signals are generated so that, when the instruction word has been executed, the selector circuit 8 may deliver to the Y bus 22 the data $y_1$ read out from the memory, the selector circuit 60 selecting an input from the Y bus, the selector circuit 61 selecting an input from the A bus 27, the selector circuit 82 selecting an input data F(="0"), the output switch 17 operating to connect the input signals $G_4$ to $G_{19}$ to the data bus 20.

Thus, when the FLFX instruction has been executed, an operation is performed between the two floating-point data A and $y_1$, and the operated result of:

$$Z = A + y_1$$
$$= [0 + \alpha_M \cdot 2^{-(\beta_E - \alpha_E)}] \cdot 2^{\beta_E} \qquad (6)$$

is obtained in the accumulator 16. This data has been normalized with $2^{\beta_E}$ made the reference value of the exponent part, and the data $\alpha_M \cdot 2^{-(\beta_E - \alpha_E)}$ of the mantissa part delivered to the data bus 20 can be handled as a fixed point data.

Usually, the optimum value of $\beta_E$ cannot be precisely known for the internal operated result A. It is therefore preferable to select the value of $\beta_E$ to be somewhat larger. However, it should be noted that when the value of $\beta_E$ is made too large, the precision of the fixed point data is reduced. In the case where, in the execution of the FLFX, the exponent part $\alpha_E$ of the operated result Z has become greater than the exponent part $\beta_E$ of the data $y_1$ for conversion stored in the memory in advance, the overflow of the mantissa part in equation (6) develops. In this case, the absolute value of the fixed point data can be fixed to the positive or negative maximum value by the operation of the output correction circuit 80 as referred to before.

On the other hand, the operation of a data in the fixed point representation externally given into a data in the floating point representation inside the processor can be carried out as follows. Firstly, the instruction of transmitting to the accumulator 16 the fixed point data applied to the input register 31 is executed. With this instruction, the fixed point representation data D of 16 bits applied to the selector circuit 60 through the data bus 20 is brought into the mantissa part $\beta_M$ by the bit position exchange owing to the operation of the selector circuit 60, and it is applied to the exponent part $16_M$ of the accumulator 16 through the selector circuit 67, shift circuit 69, latch circuit 72, adder 75, shift circuit 76 and correction circuit 87. In this case, the shift circuit 69 and 76 and the adder 75 are respectively controlled so as to pass the input data as they are.

Subsequently, the instruction of converting the fixed point representation into the floating point representation (hereinbelow, called "FXFL") is executed. In executing this instruction, the selector circuit 61 selects the accumulator output applied from the A bus 27 or the fixed point data A as the outputs $\alpha_M$ and $\alpha_E$. The selector circuit 60 selects as the outputs $\beta_M$ and $\beta_E$ a data $y_2$ for conversion which is assigned by the address part of the FXFL instruction and which is fetched from the memory 5 or 6 onto the Y bus 26. The data $y_2$ for conversion is, for example, such that the mantissa part $\beta_M$ is zero and that the exponent part $\beta_E$ is selected from a range of value [+7 to −8] and has a certain reference value. Unlike cases of executing other instructions, in the case of executing the FXFL instruction, the control signal $S_4$ is generated to enable the selector circuit 62 to select the input $\beta_E$, and both the two inputs of the comparator circuit 63 are made $\beta_E$. In this case, the selector circuit 67 of the mantissa part is caused to select the input $\alpha_M$ and the selector circuit 68 to select the input $\beta_M$, and the selector circuit 65 of the exponent part is caused to select the input $\beta_E$. In addition, the selector circuit 70 is caused to select an input data E="0" by the control signal $S_7$, to suppress the data shift operation of the shift circuit 69 in the rightwards direction.

Owing to the above control operations, the outputs of the latch circuits 71, 72 and 73 become $\gamma=\beta_E$, $e_A=\alpha_M$ and $e_B=0$. The data $e_A$ and $e_B$ are applied to the adder 75, and the added result $U_M$ $(=\alpha_M)$ has its decimal point position moved $\theta_1$ bits under the operations of the zero detector circuit 79 and the leftwards shift circuit 76. As a result, a data represented by the equation:

$$Z=[\alpha_M \cdot 2^{\theta_1}] \cdot 2^{(\beta_E-\theta_1)}$$

is obtained in the accumulator 16. This expression signifies that the data $A=\alpha_M$ in the fixed point representation has been normalized with reference to the exponent $\beta_E$ and brought into the floating point representation. Accordingly, when the above referred to data obtained in the accumulator 16 with the instruction FXFL is employed, subsequent operations can be performed in the floating point format.

In this embodiment, after the data of the input register 31 has been set once in the accumulator 16, the FXFL instruction is executed. However, in the alternative form, the circuit design can be modified so that the input data in the fixed point representation and the data $y_2$ for conversion are applied to the adder/subtracter 15 by utilizing the X bus 25 and the D bus 20, whereby the data conversion into the floating point representation is permitted with a single instruction.

The above described digital signal processor can handle data in both the fixed point and floating point formats as stated above. Moreover, when an underflow has developed in an exponent part in the case of the normalization of a floating point representation data, the normalization operation with an exponent value fixed to the minimum value can be performed. Therefore, the arithmetic operation can be automatically changed-over to the floating point operation format in the case where the numerical value of an internal operation data is large, and to the fixed point operation format in the case where it is small. Thus, a very wide dynamic range can be attained.

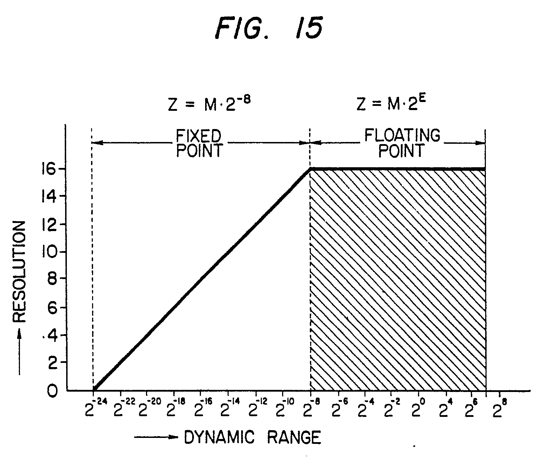

More specifically, in the case where the internal data of the adder/subtracter consists of the mantissa part of 16 bits and the exponent part of 4 bits as in the embodiment described above, the exponent part $\gamma$ can handle numerical values in the range of [+7 to −8] in the representation of 2's complements. When all operations are processed in the floating point format, the dynamic range becomes $2^{-8}$ to $2^7$ indicated by the hatched area in Figure 15, and this corresponds to 15 bits in terms of the number of bits.

When the number of normalized bits $\theta$ for the mantissa part of an operation data falls in a range of $(\gamma-\theta)<-8$, the exponent $L_E$ after the normalization is fixed to −8, whereby the arithmetic operation can be changed-over to the fixed point operation format. For this reason, the dynamic range becomes 31 bits as a whole as indicated in Figure 15, and the range of numerical values which can be treated spreads remarkably in comparison with that in the case of employing only one of the fixed and floating points formats.

In the actual application of the digital signal processor, it is often the case that $m$ multiply and add operations are repeatedly executed as indicated by way of example by the following equation:

$$T= \sum_{i=1}^{m} a_i \times b_i \qquad (8)$$

In the case of such an operation, it becomes possible to enhance the data processing efficiency and to perform operations at high speeds by means of the pipeline control which carries forward the multilying and adding/subtracting operations in parallel.

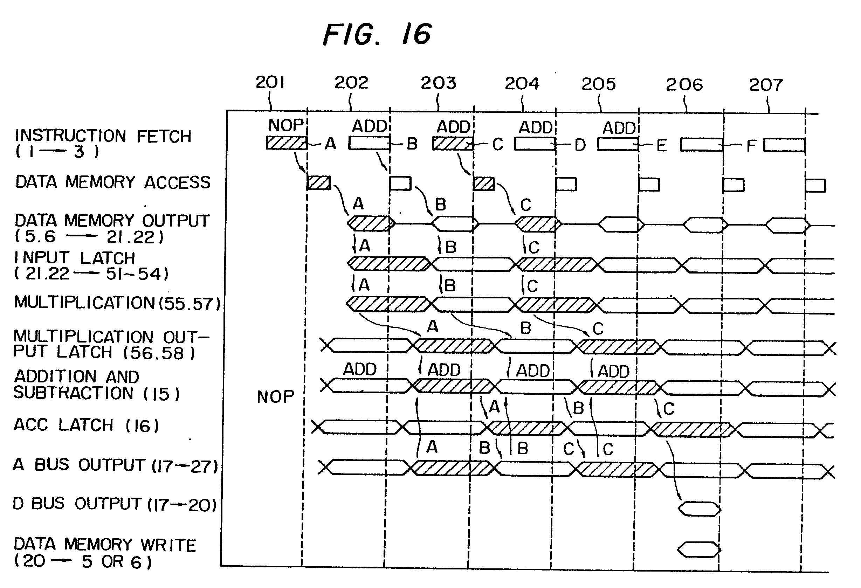

Figure 16 is a time chart showing an example of parallel operations. Using an instruction A previously fetched in an instruction cycle 201, data are read out from the data memories and are operated by a multiplier in the next cycle 202. In an instruction cycle 203, the addition or subtraction between the multiplied result and the data of the accumulator (A bus output) is executed. The operated result is delivered to the accumulator in a cycle 204. These operations of the four steps are repeated in the respective instruction cycles with each shift of 1 step. When the multiply and add operations of the predetermined times $m$ have ended, the operated result T is delivered to the data bus 20 and then transmitted to the data memory 5 or an external circuit by an instruction F.

The parallel operations of the processor based on the pipeline control are permitted owing to the fact that the multiplier 14 and the adder/subtracter 15 are connected in series, and also to the fact that the registers for temporarily holding data (in Figures 4(A) and 4(B), the latch circuits 71 and 72 correspond thereto) are arranged in positions in which required times for the operations of the multiplication and the addition/subtraction balance.

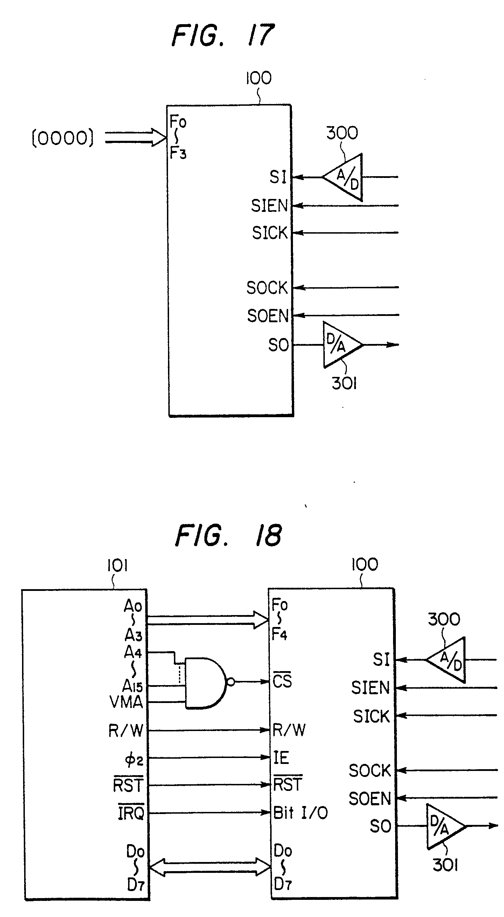

Figure 17 shows an example of the application of the above described digital signal processor, which illustrates a case where a processor 100 is connected to an analog circuit through an A/D converter 300 as well as a D/A converter 301 and where the function of a digital filter is effected.

Figure 18 shows a system construction in which the digital signal processor 100 is combined with another data processor 101, for example, our own microcomputer "MCS 6800", in order to exchange data therebetween through terminals $D_0$ to $D_7$, and in which the processings of data can be allotted to the two devices. This system construction is suitable in cases of applying the signal processor 100 to the modem or echo canceller of a communication line.

**Claims**

1. A digital processor comprising: (a) interface means (30, 31, 32, 33) for data input/output; (b) a first data bus (20) which has a first number of bits and which is connected to the interface means (30, 31, 32, 33); (c) data memories (5, 6, 7) connected to the first data bus (20) and for storing data on said first data bus (20); (d) a second data bus (21, 22, 25, 26) which transmits the data stored in said data storage means (5, 6, 7; (e) a floating point multiplication means (14) connected to the first and second data buses (20, 21, 22) and for performing floating point multiplication of data on said first and second data buses (20, 21 and 22) in floating point representation, to deliver an operated result having a floating point representation; (f) floating point addition/subtraction means (15) including an input selection portion (60, 61) selecting a pair of input data from amongst a plurality of input data and for subjecting said pair of input data to a floating point addition/subtraction; (g) accumulation means (16) for holding data delivered from said addition/subtraction means (15); (h) a third data bus (27) which supplies an output of said accumulation means to said input selection portion (60, 61) of said addition/subtraction means (15); (i) switching means (17) connected between said accumulation means (16) and said first and third data buses (20, 27); and (j) control means (4) for controlling the operations of the respective means (14, 15, 16, 17) in accordance with program instructions; characterised in that: said operated results of the multiplication means (14) and addition/subtraction means (15) have a second number of bits which is larger than the first number of bits; in that said operated result of the multiplication means (14) is transmitted to the input selection portion (60, 61) through a fourth data bus (24) having the second number of bits; in that said third data bus (27) has the second number of bits; in that said first and second data buses (20, 25, 26) are connected to the input selection portion (60, 61); in that said input selection portion (60, 61) of said addition/subtraction means (15) includes a first data conversion means (601, 603) for converting the floating point data of the first number of bits applied through said first and second data buses (20, 25, 26) into floating point data of the second number of bits; in that said switching means (17) includes a second data conversion means (171) for converting the floating point data of the second number of bits applied from said accumulation means (16) into floating point data of the first number of bits when it is necessary to provide the output of the accumulation means (16) onto the first data bus (20); and in that each output from said input selection portion (60, 61) of said addition/subtraction means (15) consists of an exponent part and a mantissa part both of which has a number of bits equal to that of said operated result of said multiplication means (14), so that when said input selection portion (60, 61) has selected fixed point data applied from at least either of said first and second data buses (20, 25, 26) said first data conversion means (601, 603) operates so as to deliver the input data to said mantissa part.

2. A digital processor according to claim 1, characterized in that said first conversion means extends a mantissa part of the floating point data, and in that said second conversion means reduces a mantissa part of the floating point data.

3. A digital processor according to claim 1, characterized in that said multiplication means comprises; (a) means (57) for multiplying first parts of the first and second data on which first parts mantissas of the first and second read out data are provided; (b) means (55) for adding second parts of the first and second data on which second parts exponents of the first and second read out data are provided; whereby the multiplication means provides outputs of said multiplying means and said adding means respectively as mantissa part and an exponent part of the product.

4. A digital processor according to claim 1, characterized in that said addition/subtraction means (15) comprises, in addition to said input selection portion (60, 61) first means (64) for subtracting the exponent parts of said pair of data selected by said input selection portion (60, 61), second means (66, 67, 68, 69, 75) for shifting one of the mantissa parts of said data in accordance with the difference of said exponent part and adding/subtracting it with the other mantissa part, and third means (76, 79, 81) for normalizing values of the resultant mantissa part and exponent part and then delivering the normalized values.

5. A digital processor according to claim 4, characterized in that said second means (66—69, 75) includes a negate circuit (66) which inverts a sign of one of the mantissa part data delivered from said input selection portion (60, 61), in accordance with the program instruction; a shift circuit (69); an adder (75) which receives an output of said shift circuit (69) at a first input terminal; and selector circuit means (67, 68) which supplies said shift circuit (69) with either one of the other mantissa part data delivered from said input selection portion (60, 61) and an output data of said negate circuit (66) and which feeds the other to a second input terminal of said adder (75); the addition or subtraction by said second means (66—69, 75) being executed in said adder (75).

6. A digital processor according to claim 4 or 5, characterized in that said third means (76—79, 81) comprises a circuit (79) which detects a number of bits to be shifted for the normalization, from the operated result of the mantissa parts delivered from the adder (75) of said second means; a shift circuit (76) which shifts the mantissa part of the output of said second means (66—69, 75) in accordance with the shift number detected by said detector circuit (79); a circuit (78) which corrects the data of the exponent parts delivered from said first means (64) in accordance with said shift number detected by said detector circuit (79); and means (77, 81) for limiting the shift number of bits of said shift circuit when a corrected value of the exponent part based on the detected shift number in the correction circuit goes beyond a predetermined value, so as to bring the value of said exponent part corrected by said correction circuit (78) into agreement with said predetermined value.

7. A digital processor according to any one of the preceding claims 4 to 6, characterized in that said addition/subtraction means (15) is further provided with fourth means (83, 85, 89, 87) for delivering a positive or negative maximum value data instead of the output of said third means (76—79, 81) when an overflow has developed in the operated result.

8. A digital processor according to any one of the preceding claims 4 to 7, characterized in that said addition/subtraction means (15) further includes fifth means (82) for suppressing the normalizing operation of said third means (76—79, 81) in response to a specified control signal (S9) applied from said control means (4), said data storage means (5, 6) includes a first area for storing a data for conversion having reference value in its exponent part and the zero value in its mantissa part, and when said data for conversion read out from said storage means (5, 6) and the output data of said accumulation means (16) have been applied to said addition/subtraction means (15), said fifth means (82) operates, whereby the floating point data supplied from said accumulation means (16) is shifted with reference to said exponent part of said data for conversion and then delivered to said first data bus (20) through said switching means (17) as a fixed point data.

9. A digital processor according to any one of the preceding claims 4 to 8, characterized in that said addition/subtraction means (15) further includes sixth means (72, 70) for suppressing the shift operation of the mantissa part data by said second means (66—69, 75) in response to a specified control signal (S4, S7) applied from said control means (4), said data storage means (5, 6, 7) includes a second area for storing a data for conversion having a reference value in its exponent part and the zero value in its mantissa part, and when said data for conversion read out from said second area has been applied to said addition/subtraction means (15) together with a fixed point data, said sixth means (72, 70) operates, whereby said fixed point data is normalized with reference to said exponent part of said data for conversion and then delivered to said accumulation means (16) as a floating point data.

10. A digital processor according to any one of the preceding claims 1 to 9, characterized in that said interface means (30, 31, 32, 33) includes a first register (30) which delivers the data of a plurality of bits on said first data bus (20) to a plurality of first external terminals in parallel, a second register (31) which receives a data of a plurality of bits applied from said first external terminals onto said first data bus (20) in parallel, a third register (33) which delivers said data of said plurality of bits on said first data bus (20) to a second external terminal in series, and a fourth register (32) which receives a data of a plurality of bits applied from a third external terminal in series, onto said first data bus (20) in parallel.

**Patentansprüche**

1. Digitaler Prozessor mit
a) einer Interface-Vorrichtung (30, 31, 32, 33) für die Dateneingabe/-ausgabe,
b) einem ersten Datenbus (20), der eine erste Anzahl von Bits hat und der mit der Interface-Vorrichtung (30, 31, 32, 33) verbunden ist,
c) Datenspeichern (5, 6, 7), die an den ersten Datenbus (20) angeschlossen sind und zum Speichern von Daten auf dem ersten Datenbus (20) dienen,
d) einem zweiten Datenbus (21, 22, 25, 26) der die in den Datenspeichern (5, 6, 7) gespeicherten Daten überträgt,
e) einer Gleitkomma-Multipliziervorrichtung (14), die an den ersten und den zweiten Datenbus (20, 21, 22) angeschlossen ist zum Ausführen einer Gleitkomma-Multiplikation von Daten auf dem ersten und dem zweiten Datenbus (20, 21 und 22) in Gleitkomma-Darstellung, um ein bearbeitetes Ergebnis zu liefern das Gleitkomma-Darstellung besitzt,
f) eine Gleitkomma-Additions/Subtraktionsvorrichtung (15), die einen Eingangsauswahlteil (60, 61) aufweist, der aus einer Anzahl von Eingangsdaten ein Paar von Eingangsdatan auswählt und dieses Paar von Eingangsdaten einer Gleitkomma-Addition/-Subtraktion unterwirft,
g) eine Akkumulatorvorrichtung (16) zum Speichern der von der Additions/Subtraktionsvorrichtung (15) gelieferten Daten,

h) einen dritten Datenbus (27), der eine Ausgabe der Akkumulatorvorrichtung dem Eingangsauswahlteil (60, 61) der Additions/Subtraktionsvorrichtung (15) zuführt,

(i) eine Schaltvorrichtung (17), die zwischen die Akkumulatorvorrichtung (16) und dem ersten und dritten Datenbus (20, 27) geschaltet ist, und

j) eine Steuervorrichtung (4) zum Steuern der Operationen der jeweiligen Vorrichtungen (14, 15, 16, 17) entsprechend Programmbefehlen, dadurch gekennzeichnet, daß

die Bearbeitungsergebnisse der Multiplikationsvorrichtung (14) und der Additions/-Subtraktionsvorrichtung (15) eine zweite Anzahl von Bits haben, die größer ist als die erste Anzahl von Bits,

daß das Bearbeitungsergebnis der Multiplikationsvorrichtung (14) zu dem Eingangsauswahlteil (60, 61) über einen vierten Datenbus (24) übertragen wird, der eine zweite Anzahl von Bits besitzt,

daß der dritte Datenbus (27) die zweite Anzahl von Bits besitzt,

daß der erste und der zweite Datenbus (20 25, 26) mit dem Eingangsauswahlteil (60, 61) verbunden sind,

daß der Eingangsauswahlteil (60, 61) der Additions/Subtraktionsvorrichtung (15) eine erste Datenkonvertierungsvorrichtung (601, 603) aufweist, um Gleitkommadaten der ersten Anzahl von Bits, die über den ersten und den zweiten Datenbus (20, 25, 26) angelegt werden, in Gleitkommadaten der zweiten Anzahl von Bits zu konvertieren,

daß die Schaltvorrichtung (17) eine zweite Datenkonvertierungsvorrichtung (171) aufweist, um Gleitkommadaten der zweiten Anzahl von Bits, die von der Akkumulatorvorrichtung (16) angelegt werden, in Gleitkommadaten der ersten Anzahl von Bits zu konvertieren, wenn es notwendig ist, die Ausgangssignale der Akkumulatorvorrichtung (16) zum dem ersten Datenbus (20) zu leiten, und daß jedes Ausgangssignal des Eingangsauswahlteils (60, 61) der Additions/Subtraktionsvorrichtung (15) aus einem Exponententeil und einem Mantissenteil besteht, die beide eine Anzahl von Bits besitzen, die der des Bearbeitungsergebnisses der Multiplikationsvorrichtung (14) gleich ist, so daß dann, wenn der Eingangsauswahlteil (60, 61) Festkommadaten ausgewählt hat, die von den ersten oder dem zweiten Datenbus (20, 25, 26) zugeführt wurden, die erste Datenkonvertierungsvorrichtung (601, 603) so arbeitet, daß sie die Eingangsdaten dem Mantissenteil zuführt.

2. Digitaler Prozessor nach Anspruch 1, dadurch gekennzeichnet, daß die erste Konvertierungsvorrichtung einen Mantissenteil der Gleitkommadaten erweitert, und daß die zweite Konvertierungsvorrichtung einen Mantissenteil der Gleitkommadaten reduziert.

3. Digitaler Prozessor nach Anspruch 1, dadurch gekennzeichnet, daß die Multiplikationsvorrichtung umfaßt:

a) eine Einrichtung (57) zum Multiplizieren erster Teile der ersten und zweiten Daten, wobei in den ersten Teilen Mantissen der ersten und zweiten ausgelesenen Daten bereitgestellt werden,

b) eine Einrichtung (55) zum Addieren zweiter Teile der ersten und zweiten Daten, wobei in den zweiten Teilen Exponenten der ersten und zweiten ausgelesenen Daten bereitgestellt werden,

wobei die Multiplikationsvorrichtung Ausgangssignale der Multipliziereinrichtung und der Addiereinrichtung als Mantissenteil bzw. als Exponententeil des Produktes liefert.

4. Digitaler Prozessor nach Anspruch 1, dadurch gekennzeichnet, daß die Additions/Subtraktionsvorrichtung (15) zusätzlich zu dem Eingangsauswahlteil (60, 61) eine erste Einrichtung (64) zum Subtrahieren der Exponententeile der von dem Eingangsauswahlteil (60, 61) ausgewählten Paare von Daten aufweist, ferner eine zweite Vorrichtung (66, 67, 68, 69, 75) umfaßt, um einen der Mantissenteile der Daten entsprechend der Differenz des Exponententeiles zu verschieben und ihn zum anderen Mantissenteil zu addieren oder davon zu subtrahieren, und eine dritte Einrichtung (76, 79, 81) aufweist, um die Werte des resultierenden Mantissenteils und des resultierenden Exponententeils zu normalisieren und dann die normalisierten Werte zu liefern.

5. Digitaler Prozessor nach Anspruch 4, dadurch gekennzeichnet, daß die zweite Einrichtung (66—69, 75) eine Negationsschaltung (66) aufweist, die das Vorzeichen von einer Mantissenteil-Information, die von dem Eingangsauswahlteil (60, 61) geliefert wird, entsprechend einem Programmbefehl invertiert, ferner eine Schiebeschaltung (69) und einen Addierer (75) aufweist, welcher ein Ausgangssignal der Schiebeschaltung (69) an seinem ersten Eingangsanschluß empfängt, und eine Auswahlschaltungseinrichtung (67, 68) umfaßt, die der Schiebeschaltung (69) die andere Mantissenteil-Information, die von dem Eingangsauswahlteil (60, 61) geliefert wird, oder die Ausgangsinformation der Negationsschaltung (66) zuführt und die die andere Information dem zweiten Eingangsanschluß des Addierers (75) zuführt, wobei die von der zweiten Einrichtung (66—69, 75) durchgeführte Addition oder Subtraktion in dem Addierer (75) ausgeführt wird.

6. Digitaler Prozessor nach Anspruch 4 oder 5, dadurch gekennzeichnet, daß die dritte Einrichtung (76—79, 81)

eine Schaltung (79) aufweist, die eine Anzahl von Bits, die für die Normalisierung zu verschieben sind, aus dem Bearbeitungsergebnis der Mantissenteile, das von dem Addierer (75) und der zweiten Einrichtung geliefert wird, feststellt,

eine Schiebeschaltung (76) aufweist, die den Mantissenteil der Ausgabe der zweiten Einrichtung (66—69, 75) entsprchend der von der zweiten Detektorschaltung (79) festgestellten Verschiebungszahl verschiebt,

eine Schaltung (78) umfaßt, die die Daten der Exponententeile, die von der ersten Einrichtung (64) geliefert werden, entsprechend der von der Detektorschaltung (79) festgestellten Verschiebungszahl korrigiert, und

eine Einrichtung (77, 81) aufweist zum Begrenzen der Verschiebungszahl von Bits der Schiebeschaltung, wenn ein korrigierter Wert des Exponententeil, der auf der in der Korrekturschaltung festgestellten Verschiebungszahl beruht, einen vorgegebenen Wert unterschreitet, so daß der Wert des Exponententeils, der durch die Korrekturschaltung (78) korrigiert ist, in Übereinstimmung mit dem vorgegebenen Wert gebracht wird.

7. Digitaler Prozessor nach einem der Ansprüche 4 bis 6, dadurch gekennzeichnet, daß die Additions/Subtraktionsvorrichtung (15) weiter mit einer vierten Einrichtung (83, 85, 89, 87) versehen ist, um eine positive oder negative Maximalwertinformation anstelle des Ausgangssignals der dritten Einrichtung (76—79, 81) zu liefern, wenn sich in dem Bearbeitungsergebnis ein Überlauf entwickelt hat.

8. Digitaler Prozessor nach einem der Ansprüche 4 bis 7, dadurch gekennzeichnet, daß die Additions/Subtraktionsvorrichtung (15) weiter eine fünfte Einrichtung (82) aufweist zum Unterdrücken der Normalisierungsoperation der dritten Einrichtung (76—79, 81) in Antwort auf ein speizifiziertes Steuersignal (S9), das von der Steuervorrichtung (4) angelegt wird, wobei die Informationssteuervorrichtung (5, 6) ein erstes Gebiet zum Speichern von Information für die Konversion aufweist, die in ihrem Exponententeil einen Referenzwert und in ihrem Mantissenteil einen Nullwert besitzt, und daß, wenn die Information für die Konversion, die aus der Speichervorrichtung (5, 6) ausgelesen worden ist, und die Ausgangsinformation der Akkumulatorvorrichtung (16) der Additions/Subtraktionsvorrichtung (15) zugeführt worden sind, die fünfte Einrichtung (82) arbeitet, wodurch die Gleitkommainformation, die von der Akkumulatorvorrichtung (16) geliefert wird, bezüglich des Exponententeils der Information für die Konversion verschoben und dann dem ersten Datenbus (20) über die Schaltvorrichtung (17) als Festkommainformation zugeführt wird.

9. Digitaler Prozessor nach einem der vorangehenden Ansprüche 4 bis 8, dadurch gekennzeichnet, daß die Additions/Subtraktionsvorrichtung (15) weiter eine sechste Einrichtung (72, 70) aufweist, um die Verschiebungsoperation der Mantissenteilinformation durch die zweite Einrichtung (66—69, 75) in Antwort auf ein speizifiziertes Steuersignal (S4, S7), das von der Steuervorrichtung (4) angelegt wird, zu unterdrücken, und daß die Datenspeichervorrichtung (5, 6, 7) ein zweites Gebiet zum Speichern von Information für die Konvertierung aufweist, die einen Referenzwert in ihrem Exponententeil und einen Nullwert im Mantissenteil aufweist, und daß dann, wenn die aus dem zweiten Teil ausgelesene Information für die Konvertierung der Additions/Subtraktionsvorrichtung (15) zusammen mit Festkommainformation zugeführt worden ist, diese sechste Einrichtung (72, 70) arbeitet, wodurch diese Festkommainformation bezüglich des Exponententeiles der Daten für die Konversion normalisiert und dann der Akkumulatorvorrichtung (16) als Gleitkommadaten zugeführt wird.

10. Digitaler Prozessor nach einem der vorangehenden Ansprüche 1 bis 9, dadurch gekennzeichnet, daß die Interface-Vorrichtung (30, 31, 32, 33) ein erstes Register (30) aufweist, das die Daten einer Anzahl von Bits auf dem ersten Datenbus (20) einer Anzahl von ersten Ausgangsanschlüssen parallel zuführt, daß ein zweites Register (31) vorhanden ist, das die Daten einer Anzahl von Bits, die von den ersten Ausgangsanschlüssen auf den zweiten Datenbus (20) angelegt werden, parallel empfängt, daß ein drittes Register (33) vorgesehen ist, das die Daten der Anzahl von Bits auf dem ersten Datenbus (20) seriell einem zweiten Außenanschluß zuführt, und daß ein viertes Register (32) vorgesehen ist, das eine Information aus einer Anzahl von Bits, die von einem dritten Außenanschluß seriell zugeführt werden, auf dem ersten Datenbus (20) parallel empfängt.

**Revendications**

1. Processeur numérique comprenant:
(a) des moyens formant interface (30, 31, 32, 33) pour l'entrée/la sortie de données;
(b) un premier bus (20) de transmission de données, qui comporte un premier nombre de bits et qui est raccordé aux moyens d'interface (30, 31, 32, 33);
(c) des mémoires de données (5, 6, 7) raccordées au premier bus (20) de transmission de données et servant à mémoriser des données circulant dans ledit premier bus (20) de transmission de données;
(d) un second bus de transmission de données (21, 22, 25, 26) qui transmet les données mémorisées dans lesdits moyens formant mémoires de données (5, 6, 7);
(e) des moyens (14) de multiplication à virgule flottante, raccordés aux premier et second bus (20, 21, 22) de transmission de données et servant à réaliser la multiplication à virgule flottante de données circulant dans lesdits premier et second bus (20, 21 et 22) de transmission de données, avec un représentation à virgule flottante, de manière à délivrer un résultat d'opération dans la représentation à virgule flottante;
(f) des moyens (15) d'addition/soustraction à virgule flottante, comprenant une première partie de sélection d'entrée (60, 61) sélectionnant un couple de données d'entrée parmi une pluralité de données d'entrée et servant à soumettre ledit couple de données d'entrée à une addition/soustraction à virgule flottante;
g) des moyens d'accumulation (16) servant à retenir les données délivrées par lesdits moyens d'addition/soustraction (15);
(h) un troisième bus (27) de transmission de données, qui envoie un signal de sortie desdits moyens d'accumulation à ladite partie de sélection d'entrée (60, 61) desdits moyens d'addition/soustraction (15);

(i) des moyens de commutation (17) raccordés entre lesdits moyens d'accumulation (16) et lesdits premier et troisième bus (20, 27) de transmission de données; et

(j) des moyens de commande (4) servant à commander les opérations des moyens respectifs (14, 15, 16, 17) conformément à des instructions de programmes; caractérisé en ce que:

lesdits résultats des opérations des moyens de multiplication (14) et des moyens d'addition/soustraction (15) comportent un second nombre de bits qui est supérieur au premier nombre de bits; en ce que ledit résultat d'opération des moyens de multiplication (14) est transmis à la partie de sélection d'entrée (60, 61) par l'intermédiaire d'un quatrième bus (24) de transmission de données, comportant le second nombre des bits; en ce que ledit troisième bus (27) de transmission de données possède le second nombre de bits; en ce que lesdits premier et second bus (20, 25, 26) de transmission de données sont raccordés à la partie de sélection d'entrée (60, 61); en ce que ladite partie de sélection d'entrée (60, 61) desdits moyens d'addition/soustraction (15) comporte des premiers moyens (601, 603) de conversion de données, pour convertir les données à virgule flottante possédant le premier nombre de bits, transmises par lesdits premier et second bus (20, 25, 26) de transmission de données, en des données à virgule flottante possédant le second nombre de bits; en ce que lesdits moyens de commutation (17) comprennent des seconds moyens (171) de conversion de données, pour convertir les données à virgule flottante possédant le second nombre de bits et délivrées par lesdits moyens d'accumulation (16), en des données à virgule flottante possédant le premier nombre de bits, lorsqu'il est nécessaire de délivrer le signal de sortie des moyens d'accumulation (16) dans le premier bus (20) de transmission de données; et en ce que chaque signal de sortie de ladite partie de sélection d'entrée (60, 61) desdits moyens d'addition/soustraction (15) est constitué par une partie formant exposant et une partie formant mantisse qui toutes deux possèdent un nombre de bits égal à celui dudit résultat d'opération desdits moyens de multiplication (14) de sorte que, lorsque ladite partie de sélection d'entrée (60, 61) contient des données sélectionnées à virgule fixe, envoyées à partir d'au moins l'un desdits premier et second bus (20, 25, 26) de transmission de données, lesdits premiers moyens (601, 603) de conversion de données agissent en envoyant les données d'entrée à ladite partie formant mantisse.

2. Processeur numérique selon la revendication 1, caractérisé en ce que lesdits premiers moyens de conversion étandent une partie formant mantisse des données à virgule flottante, et en ce que lesdits seconds moyens de conversion réduisent une partie formant mantisse des données à virgule flotante.

3. Processeur numérique selon la revendication 1, caractérisé en ce que lesdits moyens de multiplication comprennent:

(a) des moyens (57) servant à multiplier des premières parties de premières et secondes données, premières parties dans lesquelles sont insérées des mantisses des premières et secondes données lues;

(b) des moyens (55) pour additionner des secondes parties des premières et secondes données, secondes parties dans lesquelles sont insérés des exposants des premières et secondes données lues;

—ce qui a pour effet que les moyens de multiplication délivrent des signaux de sortie desdits moyens de multiplication et desdits moyens d'addition respectivement sous la forme d'une partie formant mantisse et d'une partie formant exposant du produit.

4. Processeur numérique selon la revendication 1, caractérisé en ce que lesdits moyens d'addition/soustraction (15) comportent, en dehors de ladite partie de sélection d'entrée (60, 61), des premiers moyens (64) servant à soustraire les parties formant exposants dudit couple de données sélectionnées par la partie de sélection d'entrée (60, 61), des seconds moyens (66, 67, 68, 69, 75) servant à transférer l'une des parties formant mantisses desdits données conformément à la différence de ladite partie formant exposant et à l'additionner à l'autre partie formant mantisse ou à la soustraire de cette dernière, et des troisièmes moyens (76, 79, 81) servant à normaliser des valeurs de la partie formant mantisse et de la partie formant exposant, résultantes, puis à délivrer les valeurs normalisés.

5. Processeur numérique selon la revendication, caractérisé en ce que lesdits seconds moyens (66—69, 75) comprennent un circuit inverseur (66) qui inverse le signe de l'une des données des parties formant mantisses délivrées par ladite partie de sélection d'entrée (60, 61), conformément à l'instruction du programme; un circuit de décalage (69); un additionneur (75) qui reçoit un signal de sortie dudit circuit de décalage (69) au niveau d'une première borne d'entrée; et des moyens (67, 68) formant circuit sélecteur, qui envoient audit circuit de décalage (69) l'une des autres données des partie formant mantisses, délivrées par ladite partie de sélection d'entrée (60, 61), et une donnée de sortie dudit circuit inverseur (66) et envoient l'autre de ces données à une seconde borne entrée dudit additionneur (75); l'addition ou la soustraction effectuée par lesdits seconds moyens (66—69, 75) étant exécutée dans ledit additionneur (75).

6. Processeur numérique selon la revendication 4 ou 5, caractérisé en ce que lesdits troisièmes moyens (76—79, 81) comprennent un circuit (79) qui détecte un nombre de bits devant être décalés pour la normalisation, à partir du résultat de l'opération effectuée sur les parties formant mantisses, délivré par l'additionneur (75) desdits seconds moyens; un circuit de décalage (76) qui décale la partie formant mantisse dudit signal de sortie desdits seconds moyens (66—69, 75) conformément au nombre de décalages détecté par ledit circuit détecteur (79); un circuit (78) qui corrige les données des parties formant exposants délivrées par lesdits premiers moyens (64) conformément audit nombre de décalages détecté par ledit circuit détecteur (79); et des moyens (77, 81) servant à limiter le nombre de décalage des bits dudit circuit de décalage lorsqu'une valeur corrigée de la partie formant exposant, obtenue sur la base dudit nombre de décalages détecté dans le circuit de correction, dépasse une valeur prédéterminée, de manière à amener la valeur de ladite partie formant exposant, corrigée par ledit circuit de correction (78), à coïncider avec ladite valeur prédéterminée.

7. Processeur numérique selon l'une quelconque des revendications précédentes 4 à 6, caractérisé en ce que lesdits moyens d'addition/soustraction (15) comportent en outre des quatrièmes moyens (83, 85, 89, 87) servant à délivrer une donnée de valeur maximale positive ou négative à la place du signal de sortie desdits troisièmes moyens (76—79, 81), lorsqu'un dépassement de capacité est apparu dans le résultat de l'opération.

8. Processeur numérique selon l'une quelconque des revendication précédentes 4 à 7, caractérisé en ce que lesdits moyens d'addition/soustraction (15) comportent en outre des cinquièmes moyens (82) servant à supprimer l'opération de normalisation desdits troisièmes moyens (76—79, 81) en réponse à un signal de command spécifié (S9) appliqué par lesdits moyens de commande (4), lesdits moyens (5, 6) de mémorisation de données comprennent une première zone servant à mémoriser une donnée destinée à être convertie et possédant une valeur de référence dans sa partie formant exposant et la valeur zéro dans sa partie formant mantisse, et, lorsque ladite donnée destinée à être convertie et lue à partie desdits moyens de mémoire (5, 6) et la donnée de sortie desdits moyens accumulateurs (16) ont été appliquées auxdits moyens d'addition/soustraction (15), lesdits cinquièmes moyens (82) fonctionnent, ce qui a pour effet que la donnée à virgule flottante délivrée par lesdits moyens d'accumulation (16) est décalée en référence à ladite partie formant exposant de ladite donnée destinée à être convertie et est ensuite envoyée audit premier bus (20) de transmission de données par l'intermédiaire desdits moyens de commutation (17), sous la forme d'une donnée à virgule fixe.

9. Processeur numérique selon l'une quelconque des revendications précédentes 4 à 8, caractérisé en ce que lesdits moyens d'addition/soustraction (15) comprennent en outre des sixièmes moyens (72, 70) servant à supprimer l'opération de décalage de la donnée de la partie formant mantisse à l'aide desdits seconds moyens (66—69, 75) en réponse à un signal de commande spécifié (S4, S7) délivré par lesdits moyens de commande (4), lesdits moyens (5, 6, 7) de mémorisation de données comprennent une seconde zone servant à mémoriser une donnée destinée à être convertie et possédant une valeur de référence dans sa partie formant exposant et la valeur zéro dans sa partie formant mantisse, et, lorsque ladite donnée destinée à être convertie et lue à partir de ladite seconde zone a été envoyée auxdits moyens d'addition/soustraction (15), de concert avec une donnée à virgule fixe, lesdits sixièmes moyens (72, 70) fonctionnent, ce qui a pour effet que ladite donnée à virgule fixe est normalisée en référence à ladite partie formant exposant de ladite donnée destinée à être convertie, et est ensuite envoyée auxdits moyens d'accumulation (16) sous la forme d'une donnée à virgule flottante.

10. Processeur numérique selon l'une quelconque des revendications précédentes 1 à 9, caractérisé en ce que lesdits moyens d'interface (30, 31, 32, 33) comprennent une premier registre (30) qui envoie les données possédant une pluralité de bits et circulant dans ledit premier bus (20) de transmission de données en parallèle à une pluralité de premières bornes extérieures, un second registre (31) qui reçoit les données possédant une pluralité de bits et délivrées à partir desdits premières bornes extérieures, en parallèle audit premier bus (20) de transmission de données, un troisième registre (33) qui délivre lesdites données possédant ladite pluralité de bits et circulant dans ledit premier bus (20) de transmission de données, en série à une seconds borne extérieure, et un quatrième registre (32) qui reçoit des données possédant une pluralité de bits et délivrées en série à partir d'une troisième borne extérieure, en parallèle audit premier bus (20) de transmission de données.

**FIG. 1**

## FIG. 2

## FIG. 3(A)

DECIMAL POINT

## FIG. 3(B)

DECIMAL POINT

FIG. 4 (A)

# FIG. 4(B)

## FIG. 5(A)

## FIG. 5(B)

# FIG. 6(A)

$2^{19}$          $2^4$

| 0 | 1 | 0 | 1 | 0 | 0 | 0 | ---- | 0 | 0 | $\sim e_A$

+) | 0 | 1 | 0 | 0 | 1 | 0 | 0 | ---- | 1 | 0 | $\sim e_B$

| 1 |   | 0 |   | 1 | 0 | 0 | 1 | 1 | 0 | 0 | ---- | 1 | 0 | $\sim U_M$

OVF    CARRY

| 0 | 1 | 0 | 0 | 1 | 1 | 0 | ---- | 0 | 1 | $\sim L_M$

# FIG. 6(B)

| 1 | 0 | 0 | 1 | 0 | 0 | 0 | ---- | 0 | 0 | $\sim e_A$

+) | 1 | 0 | 0 | 1 | 1 | 0 | 0 | ---- | 0 | 0 | $\sim e_B$

| 1 |   | 1 |   | 0 | 0 | 1 | 0 | 1 | 0 | 0 | ---- | 0 | 0 | $\sim U_M$

OVF    CARRY

| 1 | 0 | 0 | 1 | 0 | 1 | 0 | ---- | 0 | 0 | $\sim L_M$

FIG. 7

## FIG. 8(A)

MAXIMUM ABSOLUTE OF
OUTPUT DATA

Max ⊢

ABSOLUTE OF
OUTPUT DATA

| 1 2 3 4 5 6 7 8 9 10 11 12

REPETION NUMBER OF MULTIPLY
AND ADD OPERATION

## FIG. 8(B)

MAXIMUM ABSOLUTE OF
OUTPUT DATA

Max ⊢

ABSOLUTE OF
OUTPUT DATA

| 1 2 3 4 5 6 7 8 9 10 11 12

REPETION NUMBER OF MULTIPLY
AND ADD OPERATION

# FIG. 9

FIG. 10

FIG. 11

# FIG. 12

0 051 422

# FIG. 13

FIG. 14

# FIG. 15

# FIG. 16

# FIG. 17

100

(0000) → Fo ⌇ F3

SI ← A/D  300

SIEN ←

SICK ←

SOCK ←

SOEN ←

SO → D/A  301

# FIG. 18

101

100

Ao ⌇ A3 → Fo ⌇ F4

A4 ⌇ A15

VMA

CS

R/W → R/W

φ2 → IE

RST → RST

IRQ → Bit I/O

Do ⌇ D7 ↔ Do ⌇ D7

SI ← A/D  300

SIEN ←

SICK ←

SOCK ←

SOEN ←

SO → D/A  301